(19) Europäisches Patentamt

European Patent Office

Office européen des brevets

(11) Veröffentlichungsnummer : **0 152 507**
**B1**

(12) **EUROPÄISCHE PATENTSCHRIFT**

(45) Veröffentlichungstag der Patentschrift :
**15.03.89**

(21) Anmeldenummer : **84101854.2**

(22) Anmeldetag : **22.02.84**

(51) Int. Cl.⁴ : **G 05 D   3/14**

(54) **Positionsregelkreis.**

(43) Veröffentlichungstag der Anmeldung :
**28.08.85 Patentblatt 85/35**

(45) Bekanntmachung des Hinweises auf die Patenterteilung : **15.03.89 Patentblatt 89/11**

(84) Benannte Vertragsstaaten :
**CH DE LI SE**

(56) Entgegenhaltungen :
**EP--A-- 0 036 437**
**DE--A-- 3 218 230**
**DE--C-- 2 211 765**
**IEEE TRANSACTIONS ON AUTOMATIC CONTROL,
Band AC-28, Nr. 4, April 1983 Y. ITKIS "Dynamic
switching of Type I/Type II structures in tracking
servosystems", Seiten 531-534**

(73) Patentinhaber : **Honeywell Regelsysteme GmbH
Kaiserleistrasse 55
D-6050 Offenbach am Main (DE)**

(72) Erfinder : **Laue, Heinz
Königsbergerstrasse 4
D-6454 Bruchköbel (DE)**
Erfinder : **Spohr, Hans-Hermann, Dipl.-Ing.
Im Lochseif 15
D-6458 Rodenbach (DE)**

(74) Vertreter : **Herzbach, Dieter et al
Honeywell Europe S.A. Holding KG Patent- und Lizenzabteilung Kaiserleistrasse 55 Postfach 184
D-6050 Offenbach am Main (DE)**

## Beschreibung

Die vorliegende Erfindung bezieht sich auf einen Positionsregelkreis nach dem Gattungsbegriff des Patentanspruches 1. Ein solcher Positionsregelkreis findet vorzugsweise Anwendung bei einer Waffenricht- und Nachführanlage.

Ein derartiger Positionsregelkreis ist aus der Zeitschrift « IEEE Transactions on Automatic Control », Band AC-28, Nr. 4, April 1983, Seite 532-534, bekannt, wobei dort mit zwei unterschiedlichen Integrationskonstanten gearbeitet und in Abhängigkeit von der Regelabweichung eine Umschaltung zwischen beiden Integrationskonstanten vorgenommen wird. Dadurch erhält man einerseits eine schnelle Nachführung und andererseits eine gute Ausregelung des Regelfehlers. Jeder Integrationsanteil führt aber zu Überschwingen bei sprunghaft auftretenden Zielzuweisungen und damit verbundenen Positionswechseln.

Um dies zu vermeiden, ist es beispielsweise bei Anfahrschaltungen auf dem Gebiet der pneumatischen Regler bekannt, im I-Rückführungszweig ein von der Regelabweichung angesteuertes Begrenzungselement anzuordnen (DE-PS 2 211 765) oder den I-Rückführungszweig solange außer Funktion zu setzen, wie die Regelabweichung einen bestimmten Wert überschreitet (DE-OS 3 218 230). Alle diese Maßnahmen zeigen aber nur günstige Auswirkungen beim Anfahren des Reglers.

Aufgabe der vorliegenden Erfindung ist es, einen Positionsregelkreis der eingangs genannten Art auch in seinem dynamischen Betrieb und insbesondere dann zu verbessern, wenn rotierbare Elemente mit wechselnder Drehrichtung angesteuert werden müssen. Die Lösung dieser Aufgabe gelingt gemäß den kennzeichnenden Merkmalen des Patentanspruches 1. Weitere vorteilhafte Ausgestaltungen des erfindungsgemäßen Positionsregelkreises sind den Unteransprüchen entnehmbar.

Anhand eines in den Figuren der beiliegenden Zeichnung dargestellten Ausführungsbeispieles sei im folgenden der erfindungsgemäße Positionsregelkreis näher beschrieben. Es zeigen :

Fig. 1 den prinzipiellen Aufbau des Positionsregelkreises gemäß der vorliegenden Erfindung ;

Fig. 2 ein Diagramm zur Erläuterung der Erzeugung des Rücksetzsignales für den I-Zweig in Abhängigkeit von dem Positionsfehler $\Delta\alpha$ ; und

Fig. 3 ein Diagramm zur Erläuterung der Erzeugung des Rücksetzsignales für den I-Zweig in Abhängigkeit von dem Winkelgeschwindigkeitssignal $\omega$ .

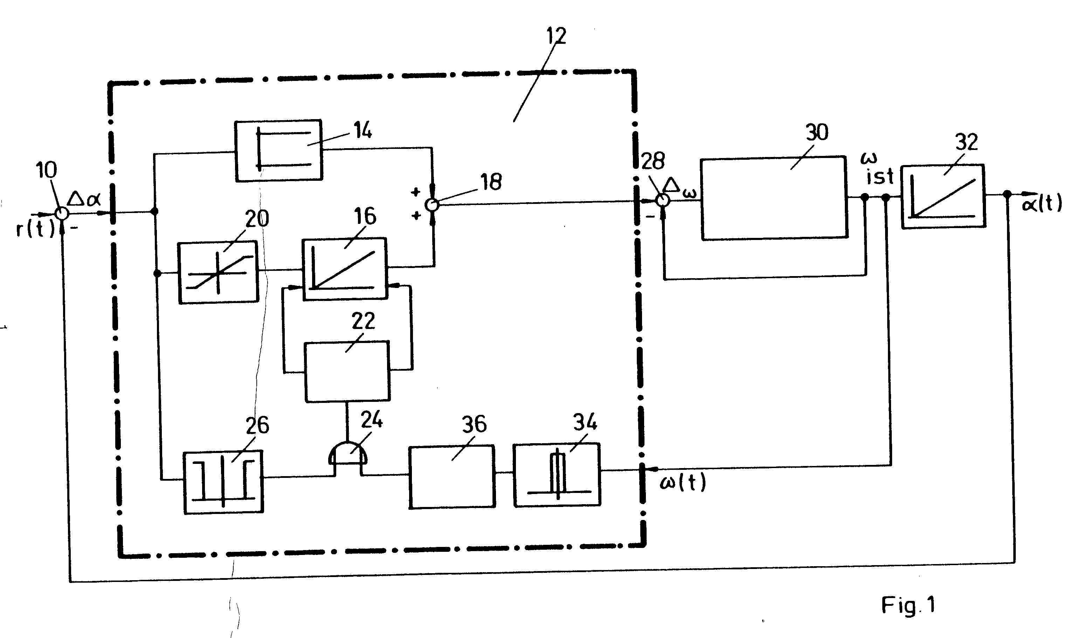

Gemäß Figur 1 liefert ein nicht dargestelltes Feuerleitsystem ein Positions-Führungssignal r (t) an eine Vergleichsstelle 10, welcher andererseits der Positionsistwert $\alpha_{ist}$ zugeführt wird. Der Positionsfehler $\Delta\alpha$ wird einem ist Lageregelkreis 12 zugeführt, der ein P-Glied 14 und ein dazu parallelgeschaltetes I-Glied 16 aufweist. Beide Zweige sind auf eine Summierstufe 18 geschaltet, die mit ihrem Ausgangssignal einen Geschwindigkeitssollwert $\omega_{soll}$ vorgibt.

Dem I-Glied 16 ist ein Amplitudenbegrenzer 20 vorgeschaltet, wodurch das dem I-Glied 16 zugeführte Signal beschnitten wird. Eine Rücksetzeinrichtung 22 schaltet bei ihrer Betätigung den I-Zweig aus, in dem beispielsweise ein Kondensator kurzgeschlossen und die in ihm befindliche Ladung vernichtet wird. Die Rücksetzeinrichtung 22 wird von dem Ausgang eines ODER-Gatters 24 angesteuert, wobei ein Eingang des ODER-Gatters 24 von einem Komparator 26 beaufschlagt wird, dem der Positionsfehler $\Delta\alpha$ zugeführt wird.

Der Ausgang der Summierstufe 18 und somit der Geschwindigkeitssollwert $\omega_{soll}$ wird einem weiteren Vergleichsglied 28 zugeführt. Dam Vergleichsglied 28 ist einem Geschwindigkeitsregelkreis 30 vorgeschaltet, und es vergleicht den Drehgeschwindigkeitsistwert $\omega_{ist}$ mit dem Drehgeschwindigkeitssollwert $\omega_{soll}$, um mit dem Geschwindigkeitsfehlersignal $\Delta\omega$ den Geschwindigkeitsregler 30 zu beaufschlagen. Aus dem Drehgeschwindigkeitsistwert $\omega_{ist}$ wird der Positionsistwert $\alpha_{ist}$ mittels eines Integrators 32 gewonnen, der beispielsweise durch einen Zähler vorgegeben sein kann. Der z. B. durch einen mit der Richtanlage gekoppelten Tachogenerator gewonnene Drehgeschwindigkeitsistwert $\omega_{ist}$ beaufschlagt über einen Fensterkomparator 34 und eine nachgeschaltete monostabile Kippstufe 36 einen zweiten Eingang des ODER-Gatters 24.

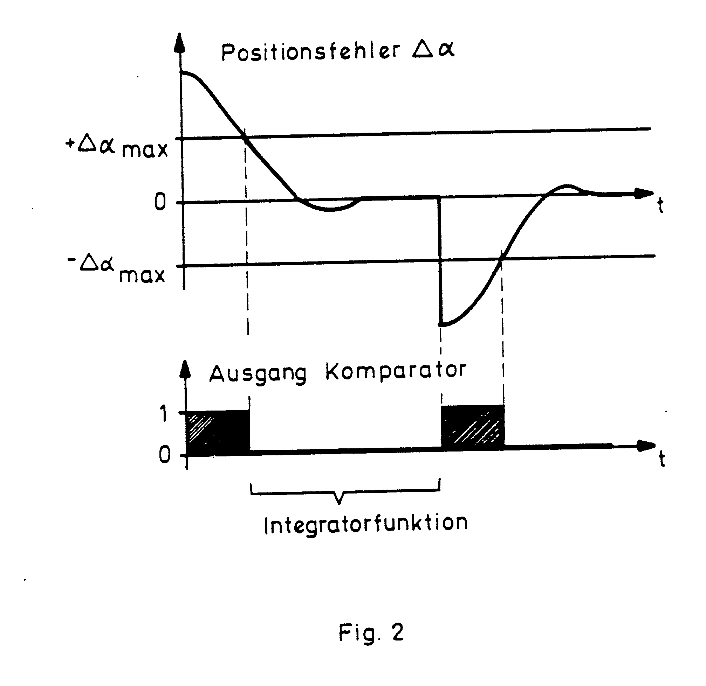

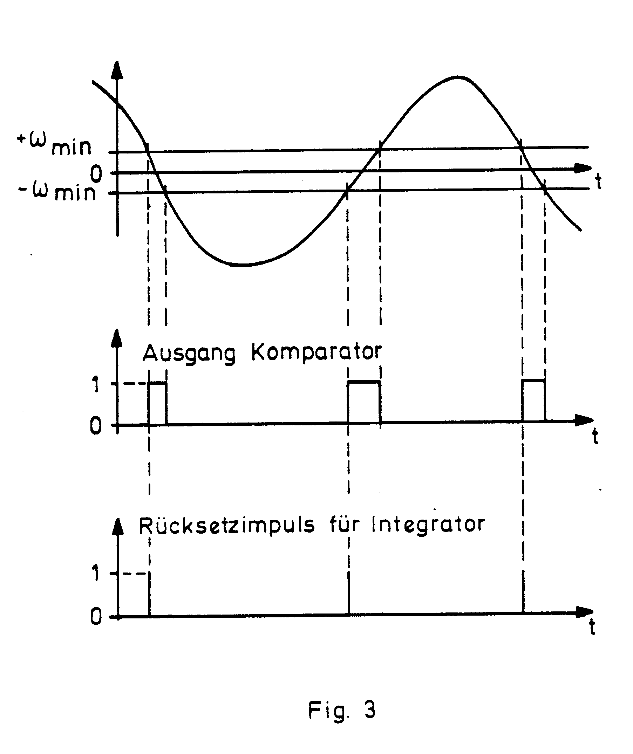

Aus diesem Aufbau des Positionsregelkreises ergibt sich die folgende aus den Figuren 2 und 3 näher hervorgehende Funktion :

Befiehlt z. B. das Feuerleitsystem der Waffenricht- und nachführanlage eine Position (Zielzuweisung), die wesentlich von der verschieden ist, die die Richtanlage momentan einnimmt, so schaltet der Komparator 26, dem der Positionsfehler $\Delta\alpha$ zugeführt wird, über das ODER-Gatter 24 und die Rücksetzeinrichtung 22 das I-Glied 16 aus und macht somit den gesamten Integralzweig unwirksam. Unterschreitet der Positionsfehler $\Delta\alpha$ die durch den Komparator 26 vorgegebene Schwelle $\pm \Delta\alpha_{max}$, so wird der dem I-Glied 16 zugeführte Positionsfehler $\Delta\alpha$ noch durch den Begrenzer 20 begrenzt. Im Bereich zwischen $\pm \Delta\alpha_{max}$ ergibt sich jedoch eine integrierende Funktion des Reglers bezüglich des von dem Begrenzer 20 hindurchgelassenen Positionsfehlers $\Delta\alpha$, was aus Figur 2 entnehmbar ist. Die Einstellung der Schaltschwelle ist direkt abhängig von der oberen Grenze der geforderten Drehgeschwindigkeit mit Positionsfehler Null.

$$|\Delta\alpha_{max}| = K \cdot \omega(\Delta\alpha = 0)$$

Auch bei kleinem oder verschwindendem Positionsfehler $\Delta\alpha$ kann die Waffe durch die Richt- und Nachführanlage mit einer gewissen Geschwindigkeit bewegt werden, und es kann ihr plötzlich durch das Feuerleitsystem ein Richtungswechsel befohlen werden. Ein solcher Richtungswechsel bedingt normalerweise eine Umladung des Integrators, und um den Richtungswechsel zu beschleunigen, wird daher gemäß der vorliegenden Erfindung bei Annäherung der Drehgeschwindigkeit ω an den Nulldurchgang das I-Glied 16 kurzfristig entladen. Dazu wird die Spannung des nicht dargestellten Tachogenerators mittels des Fensterkomparators 34 sensiert, wobei die Schaltschwelle $|\omega_{min}|$ möglichst nahe an den Nulldurchgang gelegt werden soll. Die monostabile Kippstufe 36 erzeugt sodann auf der ansteigenden Flanke des Komparator-Ausgangssignales einen Impuls. Die Impulsdauer muß mindestens solange anhalten, bis das I-Glied 16 restlos entladen ist. Eine zusätzlich vorgebbare Hysterese verhindert zweckmäßigerweise, daß bei Ungleichförmigkeit der Drehbewegung der Komparator auf einer Schaltschwelle pendelt. Da auch für Drehgeschwindigkeiten $\omega \leqslant \omega_{min}$ eine fehlerfreie Nachführung möglich sein muß, ist es von Bedeutung, daß der Integrator nach der Entladung die Integratorfunktion wieder aufnimmt.

### Patentansprüche

1. Positionsregelkreis mit umschaltbarer Struktur, insbesondere für eine Waffenricht- und Nachführanlage, mit einem Lageregelkreis und einem dazu unterlagerten Geschwindigkeitsregelkreis, wobei in einem Integralzweig des Lageregelkreises ein Integrator angeordnet ist, der mit einer Einrichtung zu seiner Rücksetzung bei einer einen vorgegebenen Wert überschreitenden Größe der Lageregelabweichung versehen ist, dadurch gekennzeichnet, daß der Lageregelkreis eine umschaltbare P-PI Struktur hat, im Integralzweig des Lageregelkreises ein Begrenzer (20) angeordnet ist, und, zur Positionsregelung von rotierbaren Elementen mit wechselnder Drehrichtung, der Positionsregelkreis mit einem Schaltungsmittel (34, 36, 24) versehen ist, um bei einem Drehrichtungswechsel und bei einer Annäherung des Drehgeschwindigkeitsistwertes an den Nulldurchgang die Rücksetzeinrichtung (22) zusätzlich kurzzeitig zu betätigen.

2. Positionsregelkreis nach Anspruch 1, dadurch gekennzeichnet, daß das Drehgeschwindigkeits-Istwertsignal (ω) über einen Fensterkomparator (34) und eine nachgeschaltete monostabile Kippstufe (36) der Rücksetzeinrichtung (22) zugeführt wird.

3. Positionsregelkreis nach Anspruch 2, gekennzeichnet durch ein der Rücksetzeinrichtung (22) vorgeschaltetes ODER-Gatter (24), das von der monostabilen Kippstufe (36) und von einem Komparator (26) angesteuert wird, dem die Lageregelabweichung (Δα) zugeführt wird.

### Claims

1. Aiming control loop having a switchable structure, in particular for a weapon aiming and tracking device, comprising a position control loop and a subordinated velocity control loop, whereat an integrating branch of the position control loop comprises an integrator which is provided with means for its resetting in the event where the amount of the position control deviation exceeds a predetermined value, characterized in that the position control loop has a switchable P-PI structure, that a limiter (20) is provided within the integrating branch of the position control loop and that for controlling of the position of rotatable elements having an alternating rotational direction the position control loop is provided with circuit means (34, 36, 24) for additionally and temporarily actuating said resetting means (22) at a change of the rotational direction and when the measured value of the rotational velocity is approaching the zero crossing.

2. Aiming control loop according to claim 1, characterized in that the measured value (ω) of the rotational velocity is fed to the resetting means (22) via a window comparator (34) and a monostable switch means (36).

3. Aiming control loop according to claim 2, characterized by an OR-gate (24) at the input of the resetting means (22) with said OR-gate being fed by the output of said monostable switch-means (30) and by the output of a comparator (26) to which the position control deviation (Δα) is fed.

### Revendications

1. Circuit régulateur de position à structure commutable, notamment pour une installation de pointage et d'asservissement d'une arme, comportant un circuit de régulation de position et un circuit de régulation de vitesse subordonné au précédent circuit, et dans lequel dans la branche d'intégration du circuit de régulation de position se trouve disposé un intégrateur qui est équipé d'un dispositif pour sa remise à l'état initial lorsque la grandeur de l'écart de régulation de position dépasse une valeur prédéterminée, caractérisé en ce que le circuit de régulation de position possède une structure P-PI commutable, qu'un limiteur (20) est disposé dans la branche d'intégration du circuit de régulation de position et que pour la régulation de position d'éléments rotatifs dont les sens de rotation alternent, le circuit régulateur de position est pourvu de moyens de circuit (34, 36, 24) permettant d'actionner en outre pendant un bref intervalle de temps le dispositif (22) de remise à l'état initial, lorsque le sens de rotation change et que la valeur réelle de la vitesse de rotation se rapproche de zéro.

2. Circuit régulateur de position selon la revendication 1, caractérisé en ce que le signal (ω) de la valeur réelle de la vitesse de rotation est envoyé par l'intermédiaire d'un comparateur à fenêtre (34) et d'un étage à bascule monostable (36) branché en aval, au dispositif (22) de remise à l'état initial.

3. Circuit régulateur de position selon la revendication 2, caractérisé par une porte OU (24) branchée en amont du dispositif (22) de remise à l'état initial qui est commandée par l'étage à bascule monostable (36) et par un comparateur (26) auquel est envoyé l'écart de réglage de position ($\Delta\alpha$).

Fig.1

EP 0 152 507 B1

Positionsfehler △α

$+\triangle\alpha_{max}$

0

$-\triangle\alpha_{max}$

t

Ausgang Komparator

1

0

t

Integratorfunktion

Fig. 2

Fig. 3